# EUROPÄISCHE PATENTSCHRIFT

(11) **EP 1 723 481 B1**
(45) Veröffentlichungstag und Bekanntmachung des Hinweises auf die Patenterteilung: **01.10.2008**
(21) Anmeldenummer: 05729092.6
(22) Anmeldetag: 11.03.2005
(51) Int. Cl.: G05D 16/06, F16K 31/126

(54) **PNEUMATISCHER AKTOR UND VERFAHREN ZUR HERSTELLUNG EINES EINE STELLMEMBRAN UND EINEN MEMBRANTRAGKÖRPER UMFASSENDEN BAUTEILS FÜR DEN AKTOR**
PNEUMATIC ACTUATOR AND METHOD FOR PRODUCING A COMPONENT THEREFOR, SAID COMPONENT COMPRISING A REGULATING MEMBRANE AND A MEMBRANE-CARRYING BODY
ACTIONNEUR PNEUMATIQUE ET PROCEDE DE FABRICATION D'UN COMPOSANT DE CET ACTIONNEUR COMPRENANT UNE MEMBRANE DE REGLAGE ET UN CORPS SUPPORT DE MEMBRANE

(30) Priorität: 12.03.2004 DE 102004012130
(43) Veröffentlichungstag der Anmeldung: 22.11.2006
(73) Patentinhaber: Hengst GmbH & Co. KG, 48147 Münster (DE)
(72) Erfinder: MEINIG, Uwe, 88348 Bad Saulgau (DE); RÖLVER, Martin, 48329 Havixbeck (DE); MAY, Thomas, 48565 Steinfurt (DE)
(74) Vertreter: Linnemann, Winfried
(86) Internationale Anmeldenummer: PCT/EP2005/002570
(87) Internationale Veröffentlichungsnummer: WO 2005/088416

(56) Entgegenhaltungen:
- EP-A- 0 802 470
- US-A- 4 130 266

## Beschreibung

Die vorliegende Erfindung betrifft einen pneumatischen Aktor mit einem verstellbaren Verbindungselement, das mit einer von dem Aktor zu verstellenden Einrichtung verbindbar ist, wobei in einem Gehäuse eine mit dem Verbindungselement verbundene Stellmembran vorgesehen ist, die einerseits von einem ersten Gasdruck oder von ersten Gasdrücken in einer ersten Membrankammer und andererseits von einem zweiten Gasdruck oder von zweiten Gasdrücken in einer zweiten Membrankammer beaufschlagt ist und wobei eine dritte Membrankammer vorgesehen ist, mit der mindestens ein weiterer Druck auf die Stellmembran wirkt, wodurch bei Veränderung des Differenzdrucks zwischen den Membrankammern die Stellmembran und zusammen mit dieser das Verbindungselement verstellt wird.

Weiterhin betrifft die Erfindung ein Verfahren zur Herstellung eines die Stellmembran und einen Membrantragkörper umfassenden Bauteils für den pneumatischen Aktor, wobei die Stellmembran aus einem Elastomer im Spritzgußverfahren in einer Spritzgußform an den Membrantragkörper angespritzt oder um diesen herumgespritzt wird.

Ein pneumatischer Aktor der eingangs genannten Art in eine konkreten Ausgestaltung als Drosselventil zum Regeln des im Inneren eines Kurbelgehäuses einer Brennkraftmaschine herrschenden Drucks ist aus DE 103 21 211 A1 bekannt. Dabei ist das Drosselventil mit dem Kurbelgehäuseinneren sowie insbesondere mit einem Ansaugtrakt der Brennkraftmaschine fluidal verbindbar und umfaßt einen Durchlaß, durch den ein Fluid strömen kann, eine zum Einstellen des Strömungsquerschnitts am Durchlaß ausgelegte Stellmembran, die einerseits mit konstantem Druck, insbesondere Umgebungsdruck, und andererseits mit einem variierenden Druck, insbesondere mit einem im Ansaugtrakt herrschenden Unterdruck, derart beaufschlagbar ist, daß die Stellmembran eine Kraft zum Schließen und/oder zum Verkleinern des Strömungsquerschnitts erfährt, und wenigstens eine Einrichtung zum Erzeugen einer Ausgleichskraft, die entgegen der Schließkraft an der Stellmembran angreift. Weiter ist dieses bekannte Drosselventil gekennzeichnet durch eine Regelungseinrichtung, die nach Maßgabe des im Kurbelgehäuseinneren herrschenden Drucks die Ausgleichskraft derart regelt, daß an der Stellmembran ein Kräftegleichgewicht einstellbar ist, beim dem der Druck im Kurbelgehäuseinneren zumindest in gewünschten Grenzen gehalten wird. In konkreter weiterer Ausgestaltung ist bei diesem bekannten Drosselventil vorgesehen, daß die wenigstens eine Einrichtung eine Zusatzmembran umfaßt, die mit der Stellmembran mechanisch gekoppelt und mit einer von der Regeleinrichtung geregelten Druckkraft beaufschlagbar ist, die insbesondere entgegen der Schließkraft gerichtet ist. Die Zusatzmembran begrenzt dabei vorzugsweise innerhalb des Drosselventils einen Raum mit einer Öffnung, in welche eine Leitung von dem Ansaugtrakt mündet, wobei insbesondere diese Öffnung koaxial zu einem Fluidauslaß des Drosselventils angeordnet ist.

Als nachteilig wird bei diesem bekannten Drosselventil angesehen, daß es einen relativ hohen technischen Aufwand erfordert, insbesondere wegen der erforderlichen Regelungseinrichtung, die für die Regelung der Ausgleichskraft, hier der auf die Zusatzmembran wirkenden Druckkraft, erforderlich ist. Außerdem sind hier die Stellmembran und die Zusatzmembran jeweils für sich dichtend in das Gehäuse des Drosselventils eingespannt, was gehäuseseitig einen relativ großen Aufwand erfordert. Außerdem ist es hier nicht ohne weiteres möglich, ein Gehäuse wahlweise für eine Ausführung mit nur der Stellmembran oder für eine Ausführung sowohl mit Stellmembran als auch mit Zusatzmembran zu verwenden. Schließlich erfordert auch die vorgesehene mechanische Kopplung zwischen der Stellmembran und der Zusatzmembran einen zusätzlichen Bauteil- und Montageaufwand, da hierfür ein separater Koppelabschnitt zwischen den beiden Membranen anzubringen ist.

Ein weiterer pneumatischer Aktor ist aus DE 196 39 146 Cl bekannt, wobei hier der Aktor zur druckabhängigen Verstellung eines Bypassventils dient, das in einer die Abgasturbine eines Abgasturboladers umgehenden Bypassleitung angeordnet ist. Der Aktor besteht hier aus einem Gehäuse, das durch eine Stellmembran in zwei Membrankammern unterteilt ist. Beide Membrankammern sind, abgesehen von jeweils einem Steuerdruckeingang, abgeschlossen. Mit der Stellmembran ist ein Verbindungselement, hier in Form einer Betätigungsstange, verbunden, das durch eine Abdichtung gasdicht aus dem Gehäuse des Aktors herausgeführt ist. Den Steuerdruckanschlüssen sind Leitungen und Schaltorgane zugeordnet, die abhängig von Betriebszuständen einer zugehörigen Brennkraftmaschine entweder der einen Membrankammer oder der anderen Membrankammer einen Steuerdruck und der jeweils anderen Membrankammer einen Referenzdruck zuführen. Auf diese Weise kann eine Verstellung des Verbindungselements und einer damit gekoppelten Einrichtung nach Maßgabe von zwei verschiedenen Steuerdrücken erfolgen.

Als nachteilig wird bei diesem bekannten Aktor angesehen, daß jeweils immer nur einer von zwei Steuerdrücken zur Verstellung des Aktors wirksam werden kann, daß aber nicht eine kombinierte Einwirkung beider Steuerdrücke gleichzeitig möglich ist. Zudem erfordert dieser Aktor für seinen zweckgemäßen Betrieb seinen Steuereingängen vorgeschaltete Schaltorgane, die zwischen verschiedenen Druckquellen umschalten, hier zwischen Atmosphärendruck und Saugrohrdruck der zugehörigen Brennkraftmaschine. Ein weiterer Nachteil des bekannten Aktors besteht darin, daß das Verbindungselement aufgrund seiner gasdichten Durchführung durch eine Wand des Gehäuses mittels einer Kolbenstangendichtung einer Reibung unterliegt. Deshalb ist für die Betätigungsstange eine aufwendige verschleißfeste Ausführung und eine formgenaue Bearbeitung der Oberfläche der Betätigungsstange erforderlich. Die Abdichtung der Betätigungsstange mittels der Kolbenstangendichtung ist empfindlich bezüglich Verschmutzung, Reibung, Verschleiß und dadurch verursachte Leckagen. Zudem ergeben sich relativ hohe Losbrechkräfte und es besteht die Gefahr eines Einfrierens bei Benetzung des Dichtungsbereichs mit gefrierfähigen Medien, zum Beispiel Wasser.

Weiter ist aus US 4 130 261 A ein pneumatischer Aktor mit zwei Membranen bekannt. US- 4 130 266 A wird als nächstliegender Stand der Technik angesehen.

Für die vorliegende Erfindung stellt sich deshalb die Aufgabe, einen pneumatischen Aktor der eingangs genannten Art zu schaffen, der die dargelegten Nachteil vermeidet und bei dem insbesondere verbesserte Möglichkeiten zur Beeinflussung der druckabhängigen Verstellung geboten werden, wobei eine einfache Herstellbarkeit und ein geringerer Montageaufwand bei kompakter Bauweise angestrebt werden. Außerdem soll ein Verfahren geschaffen werden, mit dem eine vorteilhaft einfache und kostengünstige Herstellung eines Membran-Bauteils für den pneumatischen Aktor ermöglicht wird.

Aus dem Stand der Technik ist es bekannt
- daß die dritte Membrankammer einerseits von der Stellmembran und andererseits von einer Trennmembran begrenzt ist und
- daß die Trennmembran einerseits mit der Stellmembran und andererseits mit dem Gehäuse dichtend verbunden ist.

Im Stand der Technik wird ein vorteilhaft einfach aufgebauter und somit kostengünstig herstellbarer Aktor geschaffen, der drei Membrankammern aufweist. Dabei wird die dritte Membrankammer von der Stellmembran und der Trennmembran begrenzt, sodaß das Gehäuse für die Begrenzung der dritten Membrankammer nicht benötigt wird. Aufwendige Gehäuseänderungen beim Wechsel von einer Ausführung mit zwei Membrankammern zu einer Ausführung mit drei Membrankammern werden so vermieden. Auch die Anbindung der Trennmembran an die Stellmembran trägt zu einer einfachen und kompakten Bauweise bei. Wenigstens zwei der Membrankammern sind mit je einem eigenen Steuerdruck beschickbar, so daß mindestens zwei Steuerdrücke gleichzeitig auf die Stellmembran wirken können. In der verbleibenden Membrankammer kann dabei ein Referenzdruck oder alternativ ein dritter Steuerdruck herrschen. Hierdurch wird eine Verstellung des Aktors bewirkt, die auf der kombinierten Einwirkung von zwei oder drei verschiedenen Steuerdrücken beruht. Vorgeschaltete Schaltorgane werden somit nicht mehr benötigt. Das Wirkverhältnis der zwei oder drei verschiedenen Steuerdrücke kann durch Wahl und Festlegung der jeweiligen Wirkflächen, auf denen die Steuerdrücke auf die Stellmembran einwirken können, in gewünschter Weise eingestellt werden. Dabei ist eine Verschiebung des Wirkverhältnisses in weiten Grenzen möglich, so daß eine Anpassung an viele unterschiedliche Anwendungen mit Erzielung unterschiedlicher gewünschter Steuercharakteristiken möglich ist. Eine abgedichtete und mit Reibung und weiteren Nachteilen verbundene Durchführung des Verbindungselements von der Stellmembran nach außerhalb des Gehäuses ist hier nicht erforderlich, wenn, was sinnvoll ist, die Membrankammer, durch die das Verbindungselement verläuft, eine mit dem Atmosphärendruck als Referenzdruck beaufschlagte Membrankammer ist.

Aus dem Stand der Technik ist es weiter bekannt, daß die Trennmembran konzentrisch zur Stellmembran angeordnet ist, daß die Trennmembran einen kleineren Durchmesser als die Stellmembran hat und daß die Trennmembran mit der Stellmembran in einem Bereich zwischen deren Zentralbereich und deren radial äußerem Randbereich verbunden ist. In dieser Ausgestaltung wird eine symmetrische Anordnung von Stellmembran und Trennmembran erreicht, die eine kompakte Bauform erlaubt, so daß der erfindungsgemäße Aktor im Vergleich zu herkömmlichen Aktoren mit nur zwei Membrankammern keinen vergrößerten Bauraum oder nur einen wenig vergrößerten Bauraum beansprucht. Die Festlegung des Wirkverhältnisses der auf die Stellmembran einwirkenden Steuerdrücke kann bei dieser Ausgestaltung einfach dadurch erfolgen, daß man den Verbindungsbereich zwischen dem radial äußeren Randbereich der Trennmembran und der Stellmembran in Radialrichtung gesehen weiter nach innen oder weiter nach außen verlegt. Hierdurch ergeben sich unterschiedlich große Flächen, auf denen die Steuerdrücke auf die Stellmembran einwirken können.

Die Lösung des den Aktor betreffenden Teils der Aufgabe gelingt erfindungsgemäß mit einem pneumatischen Aktor der eingangs genannten Art, der dadurch gekennzeichnet ist, daß die Stellmembran und die Trennmembran in einem Bauteil zusammengefaßt sind. Mit dieser Ausführung wird eine einfache Konstruktion erreicht, die die Funktion der Stellmembran und die Funktion der Trennmembran in einem Bauteil zusammenfaßt, was die Herstellung und Montage des pneumatischen Aktors insgesamt vereinfacht.

Weiter ist vorgesehen, daß in dem die Stellmembran und die Trennmembran umfassenden Bauteil die Stellmembran und die Trennmembran ein einstückiges Membranelement bilden. Die einstückige Ausführung des Membranelements aus Stellmembran und Trennmembran vermeidet das Herstellen von Verbindungen, beispielsweise durch Verkleben oder Verschweißen, was die Zuverlässigkeit des Membranelements erhöht und dessen Herstellung besonders wirtschaftlich macht.

In weiterer Ausgestaltung ist vorgesehen, daß das Bauteil zusätzlich einen Membrantragkörper umfaßt. Der Membrantragkörper dient insbesondere dazu, der Stellmembran und/oder der Trennmembran in gewünschten Bereichen eine höhere Steifigkeit zu verleihen, als sie das Material, aus dem die Stellmembran und die Trennmembran bestehen, allein aufbringt. Außerdem dient der Membrantragkörper zur Übertragung der Verstellkräfte auf das Verbindungselement und über dieses auf die zu verstellende Einrichtung.

Hinsichtlich der eingesetzten Materialien ist bevorzugt vorgesehen, daß das Membranelement aus einem elastisch-flexiblen Elastomer und der Membrantragkörper aus einem formstabilen Kunststoff bestehen. Die genannten Materialien besitzen jeweils die für ihren Einsatzzweck gewünschten günstigen Eigenschaften.

Zur Erzielung einer guten und einfach zu erzeugenden Verbindung zwischen den verschiedenen Materialien ist vorgesehen, daß der das Membranelement bildende Elastomer in einer Spritzgußform an den Membrantragkörper angespritzt und/oder um diesen herumgespritzt ist.

Damit die Stellmembran und die Trennmembran möglichst unbeeinflußt voneinander ihre Funktionen erfüllen können, ist weiter vorgesehen, daß der die Trennmembran bildende Teil des Membranelements mit dem Membrantragkörper nur in Teilbereichen oder teilweise lösbar verbunden ist und in einem unverbundenen Teil relativ zu dem Membrantragkörper bewegbar ist und Abstand von diesem aufweisen kann.

Um auch bei langjährigem Einsatz des Aktors eine zuverlässige Übertragung der Stellbewegungen von der Stellmembran auf die zu verstellende Einrichtung zu gewährleisten sowie zwecks günstiger Herstellung ist bevorzugt weiter vorgesehen, daß das Verbindungselement einstückig mit dem Membrantragkörper ausgeführt ist.

Weiterhin ist bevorzugt vorgesehen, daß der Membrantragkörper einen kleineren Durchmesser als die Stellmembran aufweist und daß radial außerhalb des Membrantragkörpers die Stellmembran einen Rollfalz und radial außen davon einen Einspann- und Dichtrand aufweist, wobei der Einspann- und Dichtrand dichtend mit dem Gehäuse des Aktors in Eingriff steht. Bei dieser Ausgestaltung der Stellmembran erfolgt die Verformung innerhalb der Membran praktisch nur in deren radial äußerem Bereich, wo diese Verformung für die Verstellung der Membran von anderen Teilen des Aktors, insbesondere vom Membrantragkörper, nicht behindert oder gestört wird. Der Einspann- und Dichtrand sorgt gleichzeitig für die Halterung der Stellmembran einschließlich des Membrantragkörpers im Gehäuse des Aktors und für die Abdichtung der Gehäuseteile gegeneinander, zwischen denen der Einspann- und Dichtrand eingeklemmt ist.

Zur Erzielung einer gewünschten Charakteristik des Aktors besteht weiter die Möglichkeit, daß die Stellmembran durch eine Regelfeder in einer ihrer Verstellrichtungen vorbelastet ist. Zudem wird mit der Regelfeder eine definierte Grundstellung des Aktors im drucklosen Zustand der Membrankammern bewirkt.

Eine erfindungsgemäße weitere Ausführung sieht vor, daß zwischen der ersten Membrankammer, in der der Referenzdruck herrscht, einerseits und der von dem Verbindungselement zu verstellenden Einrichtung andererseits eine Gehäusewand mit einer Durchbrechung angeordnet ist, durch die das Verbindungselement zwischen Stellmembran und Einrichtung unter Freigang und offen hindurchgeführt ist. Der Referenzdruck ist hier beispielsweise der atmosphärische Luftdruck, da durch die Durchbrechung hindurch die erste Membrankammer mit der Umgebung verbunden ist. Das Verbindungselement läuft absolut reibungsfrei durch die Durchbrechung hindurch, was reibungsbedingte Ungenauigkeiten, mögliches Festfrieren und Verschleiß ausschließt.

Eine alternative Ausführung schlägt vor, daß zwischen der ersten Membrankammer einerseits und der von dem Verbindungselement zu verstellenden Einrichtung andererseits eine Gehäusewand mit einer Durchbrechung angeordnet ist, durch die das Verbindungselement zwischen Stellmembran und Einrichtung mit Freigang und unter Abdichtung mittels einer Dichtmembran hindurchgeführt ist. In dieser Ausführung wird mit der Dichtmembran eine Abdichtung der Durchführung des Verbindungselements durch die Trennwand hindurch bewirkt. Die Abdichtung der Durchführung des Verbindungselements durch die Trennwand ist durch die Verwendung der Dichtmembran sehr reibungsarm, so daß die Dichtmembran die Charakteristik des pneumatischen Aktors praktisch nicht beeinflußt. Dabei ist es zweckmäßig, daß die Wirkfläche der Dichtmembran im Vergleich zur Wirkfläche der Stellmembran möglichst klein gehalten werden sollte. Andererseits ist es bei Bedarf nun möglich, die erste Membrankammer mit einem eigenen Steuerdruck, z.B. über einen zugeordneten eigenen Steuerdruckeingang, zu beschicken.

Eine Weiterbildung der zuvor angegebenen Ausführung besteht darin, daß die Durchbrechung von einem mit der Gehäusewand verbundenen oder einstückigen Rohrstutzen umgeben ist und daß die Dichtmembran falten- oder rollbalgartig die Durchbrechung in der Gehäusewand verschließend einerseits mit dem Rohrstutzen und andererseits mit dem Verbindungselement verbunden ist. Hiermit wird insbesondere eine außen am Gehäuse liegende, günstige Anbringungsmöglichkeit für die Dichtmembran geschaffen, was die Montage des Aktors einfach hält.

Eine alternative Weiterbildung besteht darin, daß die Dichtmembran, die die Durchbrechung in der Gehäusewand dichtend verschließt, einerseits mit der Stellmembran verbunden oder einstückig ist und andererseits mit einem die Durchbrechung umgebenden Bereich der Gehäusewand verbunden ist. In dieser Ausführung kann die Dichtmembran in das die Stellmembran und die Trennmembran sowie ggf. den Membrantragkörper umfassende Membranbauteil integriert werden, was eine einfache und kostengünstige Fertigung ermöglicht.

Der vorstehend beschriebene Aktor ist für verschiedene Anwendungen verwendbar. Vorteilhaft einsetzbar ist der Aktor als Teil eines die Einrichtung bildenden pneumatischen Druckregelventils, das im Verlauf einer gasführenden Leitung angeordnet ist und eine von dem Gas durchströmte, mit der dritten Membrankammer verbundene Ventilkammer aufweist, deren Durchlaß im Druckregelventil in Abhängigkeit vom Differenzdruck zwischen den Membrankammern selbsttätig veränderbar ist, wobei in der Ventilkammer ein mit einem Abströmquerschnitt des Druckregelventils zusammenwirkender Schließkörper vorgesehen ist, der mit dem Verbindungselement des Aktors verbunden ist und der den Durchlaß differenzdruckabhängig vergrößert oder verkleinert.

In einer noch konkreteren, besonders bevorzugten Verwendung von Aktor und Druckregelventil bilden diese ein selbsttätiges Kurbelgehäusedruckregelventil für die Regelung des Gasdrucks im Kurbelgehäuse einer Brennkraftmaschine, wobei das Druckregelventil im Verlauf einer Kurbelgehäuseentlüftungsleitung angeordnet ist und wobei an den am Aktor vorhandenen, mit der zweiten Membrankammer verbundenen Steuerdruckeingang eine diesen unmittelbar mit dem Inneren des Kurbelgehäuses verbindende Gasleitung angeschlossen ist. Mit diesem Kurbelgehäusedruckregelventil kann eine wirksame und funktionsgerechte Druckregelung im Inneren des Kurbelgehäuses erreicht werden, wobei die Druckregelung weitgehend unbeeinflußt von eventuellen weiteren Komponenten der Brennkraftmaschine ist, die im Verlauf der Kurbelgehäuseentlüftungsleitung zwischen dem Kurbelgehäuse und dem Druckregelventil vorgesehen sind, wie beispielsweise ein Ölnebelabscheider. Über den Steuerdruckeingang der zweiten Membrankammer des Aktors wird der im Kurbelgehäuse herrschende aktuelle Druck direkt und ohne Verfälschung erfaßt und als Wirkdruck der zweiten Membrankammer im Druckregelventil zur entsprechenden Verstellung der Stellmembran und des Schließkörpers zugeführt. Der in der Ventilkammer herrschende Druck herrscht auch in der dritten Membrankammer und wirkt in dieser in abgeschwächte Form auf die Stellmembran ein, wodurch die Verstellung des Aktors und des Ventils nach Maßgabe von zwei Drücken erfolgt. Das Wirkverhältnis der beiden Drükke in der zweiten und dritten Membrankammer wird durch das Wirkflächenverhältnis von Stellmembran und Trennmembran zueinander bestimmt und ist damit konstruktiv vorgebbar und festlegbar. Sofern ein Einfluß des Drucks in der dritten Membrankammer auf die Stellmembran unerwünscht ist, ist die von der Trennmembran umschlossene Wirkfläche durch Minimierung des Durchmessers der Trennmembran zu minimieren.

Die Lösung des Teils der Aufgabe, der das Verfahren betrifft, gelingt erfindungsgemäß mit einem Verfahren gemäß dem Oberbegriff des Anspruchs 18, das dadurch gekennzeichnet ist, daß neben der Stellmembran zugleich und einstückig mit dieser eine Trennmembran gespritzt wird, die über ihre membrantragkörperseitige Fläche gesehen mit dem Membrantragkörper nur in Teilbereichen oder teilweise lösbar verbunden wird und die einen mit dem Membrantragkörper unverbundenen Flächenbereich aufweist.

Mit dem erfindungsgemäßen Verfahren wird auf einfache und damit kostengünstige Weise die Herstellung eines Membranbauteils erreicht, das neben der Stellmembran und dem Membrantragkörper im selben Herstellungsgang zusätzlich eine Trennmembran erhält. Der Herstellungsaufwand für dieses Bauteil ist damit praktisch nicht höher als für ein herkömmliches Bauteil, das nur die Stellmembran und den zugehörigen Membrantragkörper umfaßt. Das erfindungsgemäße Verfahren trägt damit in besonderer Weise zu einer wirtschaftlichen Herstellbarkeit des Aktors der weiter oben erläuterten Art bei.

Aus Gründen einer symmetrischen Gestaltung und Belastung von Stell- und Trennmembran ist weiter vorgesehen, daß die Dichtmembran in ihrem radial äußeren Bereich mit dem Membrantragkörper verbunden wird. In ihrem zentralen Bereich wird damit die Trennmembran mit dem Membrantragkörper nicht verbunden und im Betrieb des Aktors ist der Membrantragkörper mit dem Verbindungselement relativ zu diesem zentralen Bereich der Trennmembran in Verstellrichtung bewegbar. Der Durchmesser dieses zentralen Bereichs wird dabei abhängig von den Eigenschaften des Membranmaterials so gewählt, daß die Trennmembran die Verstellbewegungen des Membrantragkörpers dauerhaft schadlos aufnehmen kann.

In weiterer Ausgestaltung des Verfahrens ist vorgesehen, daß der Membrantragkörper vorab als Spritzgußteil aus einem nach seinem Aushärten formbeständigen Kunststoff und mit eingeformten Verankerungsdurchbrechungen für die Stellmembran und/oder für den radial äußeren Bereich der Trennmembran hergestellt wird. Das genannte Material, vorzugsweise ein thermoplastischer Kunststoff, sorgt für die erforderliche Formbeständigkeit des Membrantragkörpers. Die erwähnten Verankerungsdurchbrechungen sorgen für einen guten Zusammenhalt zwischen Membrantragkörper und Stellmembran, ohne daß es erforderlich ist, die Materialien für diese beiden Teile flächig miteinander zu verbinden oder so auszuwählen, daß sie beim Spritzvorgang eine feste Verbindung miteinander eingehen.

Um den Spritzvorgang für die Herstellung von Stell- und Dichtmembran zu vereinfachen, wird vorgeschlagen, daß der der Dichtmembran zugewandte Oberflächenbereich des Membrantragkörpers bei dem Spritzen von Stell- und Trennmembran innerhalb einer Spritzform als formgebende Oberfläche für die Trennmembran verwendet wird. Damit muß innerhalb der Spritzform zwischen Membrantragkörper und Trennmembran kein besonderer Spritzformteil vorgesehen werden, was die Spritzform vereinfacht und verbilligt und so die Herstellung des Aktors preisgünstig hält. Zudem ist es nur auf diese Weise möglich, daß das beschriebene Membranbauteil als fertige Einheit ohne weitere Montagevorgänge das Spritzwerkzeug verläßt.

Für die Funktion der Stellmembran ist es wichtig, daß diese in ihrer Beweglichkeit durch die Trennmembran nicht beeinträchtigt wird. Um diesen wichtigen Punkt schon bei der Herstellung des Bauteils zu berücksichtigen, ist bevorzugt vorgesehen, daß auf den der Trennmembran zugewandten, mit dieser nicht zu verbindenden Oberflächenbereich des Membrantragkörpers vor dem Spritzen von Stell-und Trennmembran ein Trennmittel aufgetragen wird und daß nach dem Spritzen von Steil- und Trennmembran die Trennmembran von dem Membrantragkörper in ihrem nicht mit diesem verbundenen Bereich weggezogen und auf Abstand gebracht wird.

Eine dazu alternative Ausgestaltung des Verfahrens sieht schließlich vor, daß für den Membrantragkörper zumindest in seinem der Trennmembran zugewandten, mit dieser nicht zu verbindenden Oberflächenbereich einerseits und für die Stell- und Trennmembran andererseits jeweils sich bei dem Spritzvorgang nicht oder nur unwesentlich verbindende Materialien verwendet werden und daß nach dem Spritzen von Stell- und Trennmembran die Trennmembran in ihrem nicht mit dem Membrantragkörper verbundenen Bereich von dem Membrantragkörper weggezogen und auf Abstand gebracht wird.

Ausführungsbeispiele des erfindungsgemäßen Aktors und das erfindungsgemäße Verfahren werden im folgenden anhand einer Zeichnung weiter erläutert. Die Figuren der Zeichnung zeigen:
- Figur 1: einen pneumatischen Aktor in einer ersten Ausführung und in einem ersten Betriebszustand, im Querschnitt,
- Figur 2: den pneumatischen Aktor aus Figur 1 in einem zweiten Betriebszustand, im Querschnitt,
- Figur 2a: den pneumatischen Aktor aus Figur 2 in geänderter Ausführung im gleichen Betriebszustand, im Querschnitt,
- Figur 2b: den pneumatischen Aktor aus Figur 2 in nochmals geänderter Ausführung im gleichen Betriebszustand, im Querschnitt,
- Figur 3: den pneumatischen Aktor in einer vierten Ausführung, nun als Teil eines Druckregelventils in einem voll geöffneten Zustand, im Querschnitt,
- Figur 4: ein Bauteil des Aktors aus Figur 3, das einen Membrantragkörper, eine Stellmembran und eine Trennmembran umfaßt, unmittelbar nach einem Entformen am Ende eines Herstellungsvorgangs, bei dem die Membranen um den Membrantragkörper gespritzt wurden, im Querschnitt, und

- Figur 5: das Bauteil aus Figur 4, nun in einem einbaufertigen Zustand, wieder im Querschnitt.

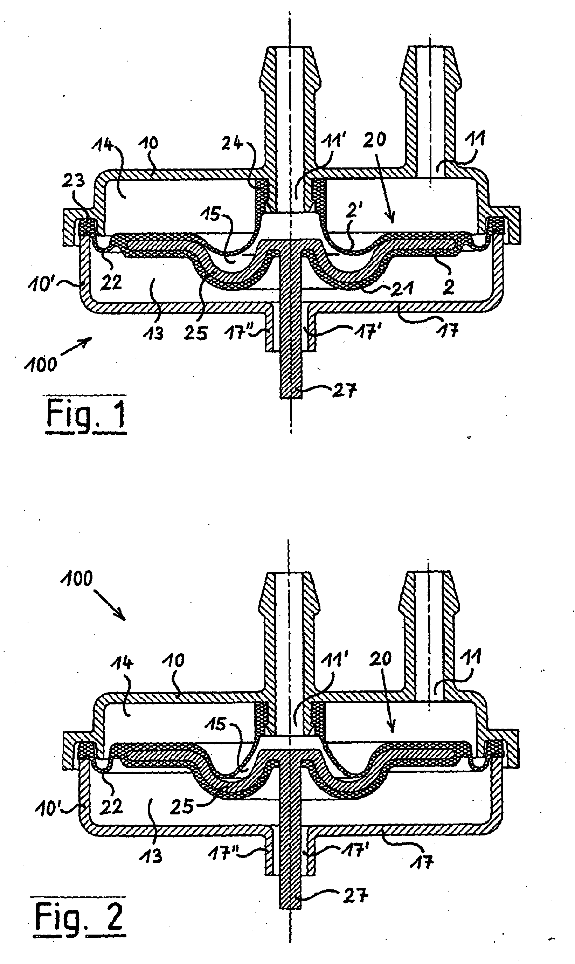

Figur 1 zeigt ein erstes Ausführungsbeispiel eines Aktors 100 in einem Querschnitt. Der Aktor 100 umfaßt ein Gehäuse 10 mit einem Deckel 10', die miteinander dichtend verbunden sind. Im Inneren des Gehäuses 10, 10' ist ein Membranbauteil 20 angeordnet, das rotationssymmetrisch ist und das radial außen einen Einspann- und Dichtrand 23 aufweist. Mittels dieses Randes 23 ist das Membranbauteil 20 dichtend zwischen Gehäuse 10 und dessen Deckel 10' eingeklemmt, wodurch Gehäuse 10 und Deckel 10' gegeneinander gasdicht abgedichtet werden und das Membranbauteil 20 gehalten wird.

Das Membranbauteil 20 umfaßt hier eine Stellmembran 2 und eine Trennmembran 2' sowie einen Membrantragkörper 25. Der Membrantragkörper 25 besteht aus einem formfesten Material, z. B. einem thermoplastischen Kunststoff. Die Membranen 2, 2' bestehen aus einem leicht verformbaren, elastisch-flexiblen Elastomer. Radial innen hat die Trennmembran 2' einen Montage- und Dichtrand 24 zur dichten Verbindung mit dem Gehäuse 10.

Die beiden Membranen 2, 2' sind einstückig miteinander ausgeführt. Zur Herstellung des Membranbauteils 20 wird zweckmäßig zunächst vorab der Membrantragkörper 25, z. B. als Spritzgußteil, hergestellt. Dieser Membrantragkörper 25 wird dann in eine zweite Spritzform eingelegt, in der der Membrantragkörper 25 mit den beiden Membranen 2, 2' umspritzt wird. Dabei dient die in Figur 1 nach oben weisende Seite des Membrantragkörpers 25 als formgebende Oberfläche beim Spritzvorgang der Membranen 2, 2'. Nach dem Spritzvorgang wird der radial mittlere Bereich der Trennmembran 2' von dem Membrantragkörper 25 weggezogen, wodurch der in Figur 1 dargestellt Zustand des Membranbauteils 20 erreicht wird.

In seinem eingebauten Zustand unterteilt das Membranbauteil 20 das Innere des mit dem Deckel 10' verschlossenen Gehäuses 10 in drei Membrankammern, nämlich eine erste, hier untere Membrankammer 13 und eine zweite, hier obere Membrankammer 14. Eine dritte Membrankammer 15 wird zwischen der hier nach oben weisenden Seite des Membrantragkörpers 25 und der nach unten weisenden Seite der Trennmembran 2' gebildet; diese dritte Membrankammer 15 liegt also hier in der zweiten Membrankammer 14.

Die erste Membrankammer 13 steht über eine Durchbrechung 17', die durch einen zentralen kurzen rohrförmigen Stutzen 17" am Deckel 10' gebildet ist, beispielsweise mit der freien Atmosphäre in Verbindung. Der atmosphärische Luftdruck bildet dann einen in der ersten Membrankammer 13 herrschenden Referenzdruck.

Die zweite Membrankammer 14 ist über einen Steuerdruckeingang 11 mit einem oder mehreren Räumen, in denen ein erster Steuerdruck herrscht, verbindbar.

Die dritte Membrankammer 15 schließlich ist über einen weiteren Steuerdruckeingang 11' mit mindestens einem weiteren Raum, in dem ein zweiter Steuerdruck herrscht, verbindbar.

Schließlich umfaßt der Aktor 100 ein Verbindungselement 27, das hier die Form einer Stange hat, die durch die zentrale Durchbrechung 17' im Deckel 10' nach unten hin vorragt. An seinem oberen Ende ist das Verbindungselement 27 einstückig mit dem Membrantragkörper 25 ausgebildet. Mit dem unteren Ende des Verbindungselements 27 kann entweder unmittelbar oder über ein Übertragungsorgan eine verstellbare Einrichtung betätigt werden, die hier nicht dargestellt ist.

Die Stellung des Verbindungselements 27 relativ zum Gehäuse 10 und dessen Deckel 10' wird durch die in den Membrankammern 14 und 15 herrschenden Drücke in Relation zu dem in der Membrankammer 13 herrschenden Druck bestimmt. Dabei ergibt sich eine kombinierte Wirkung der beiden Drücke auf das Membranbauteil 20. Die Wirkung jedes Drucks in den Membrankammern 14 und 15 hängt von der von dem jeweiligen Druck beaufschlagten Fläche des Membranbauteils 20 ab. Im dargestellten Ausführungsbeispiel wirkt der Druck in der Membrankammer 14 auf den radial äußeren, hier flächenmäßig größeren Teil des Membranbauteils 20. Der Druck in der dritten Membrankammer 15 wirkt hier auf den radial inneren Bereich 21 des Membranbauteils 20 und damit auf eine kleinere Wirkfläche. Damit wird bei vorgegebenem Druck in der Membrankammer 13 die Verstellung des Verbindungselements 27 zum überwiegenden Teil durch den Druck in der Membrankammer 14 bestimmt, jedoch zu einem geringeren Teil auch durch den Druck in der dritten Membrankammer 15 beeinflußt.

Das Wirkverhältnis der beiden Drücke in den Membrankammern 14 und 15 läßt sich durch Veränderung der für den jeweiligen Druck wirksamen Flächen des Membranbauteils 20 variieren. Wenn der radial äußere Bereich, auf den der Druck in der Membrankammer 14 wirkt, in Radialrichtung nach innen auf Kosten der vom Druck in der Membrankammer 15 beaufschlagten Fläche vergrößert wird, wird die Wirkung des Drucks in der Membrankammer 14 auf die Position des Verbindungselements 27 im Verhältnis zu dem Druck in der Membrankammer 15 vergrößert. Umgekehrt kann das Verhältnis auch in der anderen Richtung verändert werden.

Maßgeblich für die Veränderung dieses Wirkverhältnisses ist, abgesehen vom Verlauf der axialen Steifigkeit der Rollfalten der Stellmembran 2 über deren Radius, die Lage des Bereichs, in dem die Trennmembran 2' in ihrem radial äußeren Bereich in einen festen Verbund mit dem Membrantragkörper 25 übergeht.

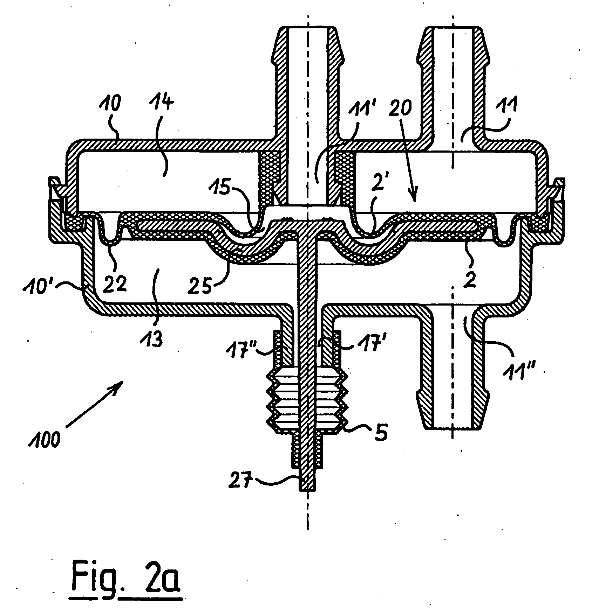

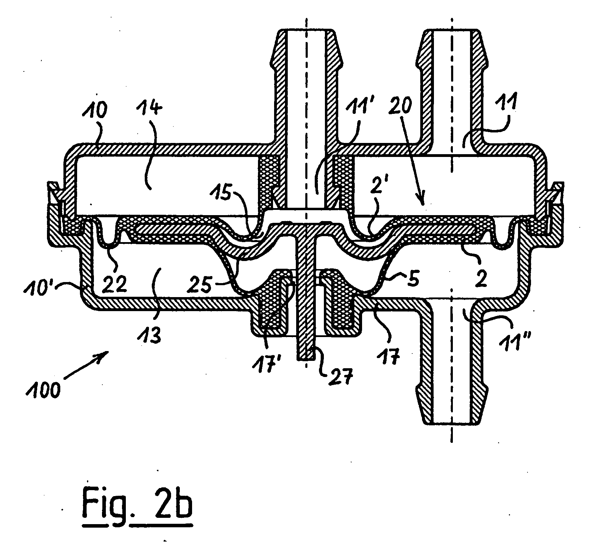

Figur 2 zeigt den Aktor 100 aus Figur 1 wieder im Querschnitt, nun aber in einem zweiten Betriebszustand. In diesem zweiten Betriebszustand ist der Druck zumindest in einer der beiden Membrankammern 14, 15 im Vergleich zum Zustand gemäß Figur 1 verringert. Hierdurch ergibt sich eine resultierende Kraft auf das Membranbauteil 20, die gemäß Figur 2 zu einer Verschiebung nach oben hin führt. Hierdurch wird das Verbindungselement 27 relativ zum Gehäuse 10 und dessen Deckel 10' nach oben bewegt; es wird also eine Verstellbewegung des Verbindungselements 27 durch die Druckveränderung bewirkt. Auf diese Weise kann eine zugeordnete, auch in Figur 2 nicht dargestellte Einrichtung druckabhängig durch den Aktor 100 verstellt werden. Dabei erfolgt die Verstellung nicht nur nach Maßgabe eines einzigen Steuerdrucks, sondern nach Maßgabe von zwei Steuerdrücken, die über die Steuereingänge 11 und 11' den Membrankammer 14 und 15 zugeführt werden.

Figur 2a zeigt eine Abwandlung des Aktors 100 aus Figur 2 in gleicher Darstellungsweise. Die Abwandlung des Aktors 100 gemäß Figur 2a im Vergleich zu dem Aktor 100 gemäß Figur 2 besteht darin, daß in Figur 2a die Durchbrechung 17' durch eine Dichtmembran 5 gegen das Verbindungselement 27 abgedichtet ist. Damit ist die Durchbrechung 17' nicht mehr nach außen hin offen. Die Dichtmembran 5 ist hier in Form eines Faltenbalgs ausgeführt, dessen eines, hier oberes Ende mit dem Gehäuse 10 bzw. hier mit dessen Deckel 10' und dessen anderes Ende mit dem stangenförmigen Verbindungselement 27 dichtend verbunden ist. Den Teil des Gehäusedeckels 10', mit dem die Dichtmembran 5 verbunden ist, bildet auch hier ein rohrförmiger Stutzen 17" , der die Durchbrechung 17' umgibt.

Ein weiterer Unterschied zwischen den beiden Aktoren 100 gemäß Figur 2 und 2a besteht darin, daß in Figur 2a die erste, hier untere Membrankammer 13 nun über einen eigenen, dritten Steuerdruckeingang 11" verfügt. Der Steuerdruckeingang 11" ist auch hier als Leitungsanschlußstutzen ausgebildet, an den eine Rohr- oder Schlauchleitung anschließbar ist, über die ein gewünschter Steuerdruck der Membrankammer 13 zuführbar ist. Damit kann der Aktor 100 gemäß Figur 2a mit drei Steuerdrücken gleichzeitig beaufschlagt werden, die in unterschiedlichem Maße, abhängig von ihrer jeweiligen Wirkfläche, auf die Stellmembran 2 und deren Stellung relativ zum Gehäuse 10 und dessen Deckel 10' einwirken.

Für die Verstellung der faltenbalgförmigen Dichtmembran 5 wird nur eine sehr kleine Verstellkraft benötigt, so daß hierdurch die Charakteristik des Aktors 100 weitestgehend unbeeinflußt bleibt. Alternativ beseht auch die Möglichkeit, eine faltenbalgförmige Dichtmembran 5 einzusetzen, die eine definierte Federcharakteristik aufweist, um mit der Dichtmembran 5 gleichzeitig die Funktion einer Regelfeder in den Aktor 100 zu integrieren.

Figur 2b zeigt eine zu der Ausführung gemäß Figur 2a alternative Ausführung des Aktors 100. Auch bei dem Aktor 100 gemäß Figur 2b ist die Durchbrechung 17' für das stangenförmige Verbindungselement 27 im Hinblick auf die Membrankammer 13 nicht offen ausgeführt, sondern ebenfalls mittels einer Dichtmembran 5 abgedichtet. Die Dichtmembran 5 ist hier in das Innere der Membrankammer 13 verlegt uns zugleich einstückig mit der Stellmembran 2 ausgebildet. Dabei geht der radial äußere Bereich der Dichtmembran 5 in die Stellmembran 2 über. Ein radial innerer Bereich der Dichtmembran 5 ist mit einem zentralen Bereich der die Durchbrechung 17' umgebenden Wand 17 des Gehäusedeckels 10' dichtend verbunden. Auf diese Weise wird die Membrankammer 13 unterhalb der Stellmembran 2 von der äußeren Umgebung getrennt.

Wie auch schon bei dem Aktor 100 gemäß Figur 2a ist bei dem Aktor 100 gemäß Figur 2b die untere Membrankammer 13 mit einem eigenen Steuerdruckeingang 11 " verbunden. Damit können auch bei dem Aktor 100 gemäß Figur 2b drei unterschiedliche Steuerdrücke gleichzeitig den verschiedenen Membrankammer 13, 14, 15 zugeführt werden und es wird eine Verstellung des Verbindungselements 27 in Abhängigkeit von den Verhältnissen der verschiedenen Drücke relativ zueinander bewirkt.

Die Wirkung eines außerhalb des Aktors 100 herrschenden Drucks, der durch die Durchbrechung 17' hindurch auf den radial zentralen Bereich des Membrantragkörpers 25 einwirken kann, kann durch eine möglichst kleine Wirkfläche so klein gehalten werden, daß er die Verstellung der Stellmembran 2 nicht in unerwünschter Weise beeinflußt. Insbesondere gelingt dies durch einen möglichst weit radial innen liegenden Übergang der Dichtmembran 5 in die Stellmembran 2.

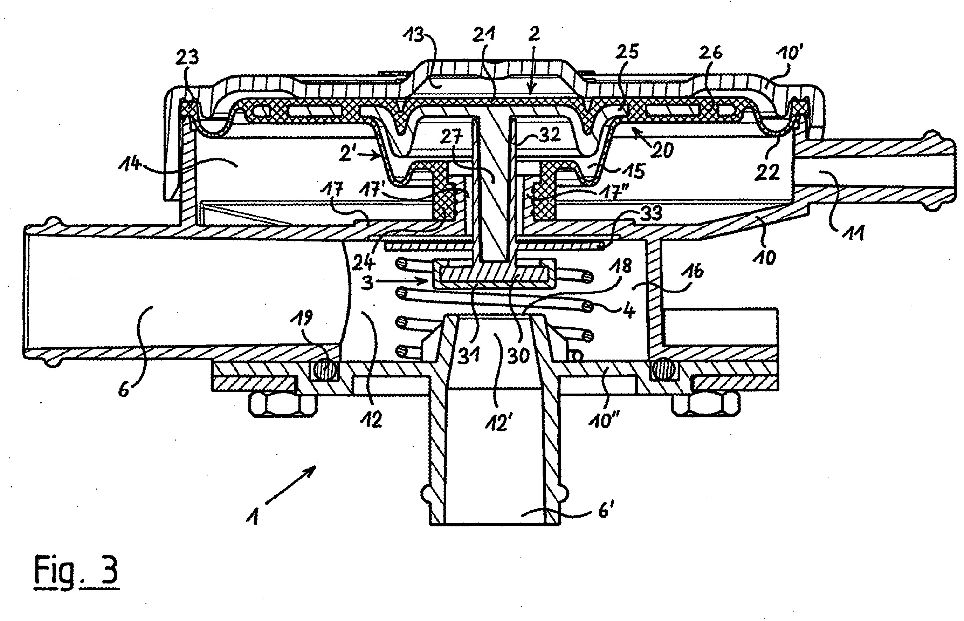

Figur 3. zeigt einen Aktor 100 als Teil eines Druckregelventils 1 in einem Querschnitt. Der Aktor 100 besitzt auch hier ein Gehäuse 10, in dessen oberem Teil eine Stellmembran 2 angeordnet ist. Die auch hier rotationssymmetrische Stellmembran 2 unterteilt den oberen Teil des Inneren des Gehäuses 10 in eine erste, hier obere Membrankammer 13 und eine zweite, hier untere Membrankammer 14. Oberseitig ist der obere Teil des Gehäuses 10 durch einen Deckel 10' verschlossen. An ihrem radial äußeren Rand besitzt die Stellmembran 2 einen Einspann- und Dichtrand 23, der dichtend und die Stellmembran 2 haltend zwischen einer nach oben weisenden, umlaufenden Randkante des Gehäuses 10 und dem dieses oberseitig verschließenden Deckel 10' eingeklemmt ist.

Die obere Membrankammer 13 steht über eine hier nicht dargestellte Verbindungsöffnung, z.B. eine kleine Bohrung, mit der freien Atmosphäre in Verbindung, wodurch in der oberen Membrankammer 13 immer der atmosphärische Luftdruck als Referenzdruck herrscht.

Die untere Membrankammer 14 ist mit einem Steuerdruckeingang 11 verbunden, der hier als Leitungsanschlußstutzen ausgebildet ist. Dieser Steuerdruckeingang 11 kann beispielsweise über eine Schlauch- oder Rohrleitung mit dem Inneren des Kurbelgehäuses einer zugehörigen, hier nicht dargestellten Brennkraftmaschine verbunden sein. Über den Steuerdruckeingang 11 wird die untere Membrankammer 14 unter einen variierenden Steuerdruck gesetzt, der sich von dem Druck in der oberen Membrankammer 13 mehr oder weniger unterscheidet. Entsprechend der Druckdifferenz zwischen der oberen Membrankammer 13 und der unteren Membrankammer 14 ergibt sich eine auf die Stellmembran 2 wirkende resultierende Kraft, die zu einer Verstellbewegung der Stellmembran 2 senkrecht zu ihrer Flächenerstreckung führt.

Die Stellmembran 2 besitzt im dargestellten Ausführungsbeispiel einen Membrantragkörper 25, der in Draufsicht gesehen eine im wesentlichen runde, scheibenartige Form aufweist, jedoch in seinem Durchmesser kleiner ist als die Stellmembran 2. Der Membrantragkörper 25 besteht aus einem formstabilen Material, vorzugsweise aus einem thermoplastischen Kunststoff, der eine Herstellung des Membrantragkörpers 25 als Spritzgußteil erlaubt. Der Membrantragkörper 25 besitzt über seine Fläche verteilt mehrere Durchbrechungen 26. Diese Durchbrechungen 26 dienen zur Verankerung des Membrantragkörpers 25 mit der Stellmembran 2.

Die Stellmembran 2 besteht aus einem Elastomer, der nach Fertigung des Membrantragkörpers 25 an diesen angespritzt bzw. um diesen herumgespritzt ist. Radial außen überragt die Stellmembran 2 den Membrantragkörper 25 und weist in diesem radial äußeren Bereich, jedoch radial innen vom Einspann- und Dichtrand 23, einen umlaufenden Rollfalz 22 auf. Hier ist das Material der Stellmembran 2 besonders dünn und dadurch leichtgängig elastisch verformbar, um die Verstellbewegung der Stellmembran 2 möglichst leichtgängig zu ermöglichen. In ihrem radial innen von dem Rollfalz 22 liegenden zentralen Bereich 21 ist die Stellmembran 2 durch den Membrantragkörper 25 versteift.

Vom Zentrum des Membrantragkörpers 25 geht ein mit diesem einstückiges, stielförmiges Verbindungselement 27 nach unten hin ab.

Um dieses Verbindungselement 27 herum erstreckt sich eine Trennmembran 2', die hier aus demselben Material besteht wie die Stellmembran 2. Alternativ sind durch Einsatz eines sogenannten Zweikomponenten-Spritzgießverfahrens auch unterschiedliche Materialien für die beiden Membranen 2, 2' möglich. Die Trennmembran 2' ist mit der Stellmembran 2 einstückig ausgebildet. Weiter besitzt die Trennmembran 2' nach unten hin einen Abstand, der eine Relativbewegung zwischen der Trennmembran 2' und dem Membrantragkörper 25 zuläßt, so daß die Stellmembran 2 zusammen mit dem Membrantragkörper 25 relativ zu einem unteren Endbereich der Trennmembran 2' frei verstellbar ist. Dieser untere Endbereich der Trennmembran bildet einen Montage- und Dichtrand 24, der an einem Befestigungsstutzen 17 " dichtend angebracht ist.

Dieser Stutzen 17 " bildet einen Teil einer Gehäusewand 17, die die untere Membrankammer 14 von einer unter der Trennwand 17 liegenden Ventilkammer 16 trennt. In der Trennwand 17 befindet sich eine Durchbrechung 17', die von dem Stutzen 17 " umgeben ist. Durch diese Durchbrechung 17' hindurch verläuft mit Freigang das Verbindungselement 27 von dem Membrantragkörper 25 kommend nach unten hin bis in die Ventilkammer 16. Die Dichtmembran 2' sorgt für eine gasdichte Trennung zwischen der Ventilkammer 16 auf der einen Seite und der unteren Membrankammer 14 auf der anderen Seite. Der Raum zwischen der Stellmembran 2 und der Trennmembran 2' bildet eine dritte Membrankammer 15, die durch die Durchbrechung 17 hindurch mit der Ventilkammer 16 in Verbindung steht. Die Durchbrechung 17 bildet hier also zugleich den Steuerdruckeingang (vg. Ziffer 11' in Fig. 1 und 2) für die dritte Membrankammer 15. Damit herrscht in der dritten Membrankammer 15 immer der gleiche Druck, der gerade in der Ventilkammer 16 herrscht. Der Druck in der dritten Membrankammer 15 beaufschlagt den zentralen Bereich der Unterseite der Stellmembran 2, wobei hier diese Wirkfläche aber kleiner ist als die Fläche der Stellmembran 2, auf die der Druck in der zweiten Membrankammer 14 wirkt. Damit bestimmt der Druck in der Ventilkammer 16 und in der dritten Membrankammer 15 die Verstellung der Stellmembran 2 mit, jedoch in einem geringeren Maße als es der Druck in der zweiten Membrankammer 14 tut.

Die Ventilkammer 16 besitzt links in Figur 3 einen Gaseinlaß 12, der mit einer gasführenden Leitung 6, hier in Form eines Rohranschlußstutzens, verbunden ist. Nach unten hin geht von der Ventilkammer 16 ein Gasauslaß 12' ab, der in eine gasführende Leitung 6', ebenfalls in Form eines Rohranschlußstutzens, übergeht.

Der Gasauslaß 12' ragt um einen gewissen Betrag in das Innere der Ventilkammer 16 nach oben hinein und bildet mit seinem oberen Stirnende einen Abströmquerschnitt 18.

Oberhalb dieses Abströmquerschnitts 18 ist ein Schließkörper 3 sichtbar, der durch eine kreisscheibenförmige Platte 30 mit einer elastischen Auflage 31 gebildet ist. Nach oben hin erstreckt sich von der Platte 30 ein Hülsenteil 32, mit dem der Schließkörper 3 auf das Verbindungselement 27 lose aufgesteckt oder reibschlüssig aufgepreßt oder unter Verwendung von Klebstoff aufgesetzt ist. Somit wird erreicht, daß jede Verstellbewegung der Stellmembran 2 auch von dem Schließkörper 3 ausgeführt wird.

Im Abstand oberhalb der Platte 30 ist an den Hülsenteil 32 eine radial nach außen vorragende, kragenförmige Federstützplatte 33 angeformt. Diese Federstützplatte 33 dient zur Abstützung des oberen Endes einer Regelfeder 4, deren anderes, unteres Ende an einem unteren Gehäuseteil 10" abgestützt ist. Die Regelfeder 4 belastet, wie dies bei Druckregelventilen üblich ist, die Stellmembran 2 mit einer in Öffnungsrichtung wirkenden Vorbelastungskraft. Gleichzeitig sorgt hier die Regelfeder 4 dafür, daß der Schließkörper 3 mit seinem Hülsenteil 32 bei einer losen Steckverbindung stets auf Anschlag auf das Verbindungelement 27 gedrückt wird.

Der untere Gehäuseteil 10'', der den Gasauslaß 12' aufweist, ist als separat gefertigter Gehäuseteil mittels Schraubverbindungen und unter Zwischenlage einer Dichtung 19 mit dem übrigen Gehäuse 10 verbunden. Alternativ dazu sind stoffschlüssige Verbindungen, z.B. durch Ultraschallschweißen, möglich.

Die Gasleitung 6 kann beispielsweise ein Abschnitt einer Kurbelgehäuseentlüftungsleitung sein, die von dem Kurbelgehäuse einer zugehörigen Brennkraftmaschine zum Druckregelventil 1 führt. Im Verlauf dieses vor dem Druckregelventil 1 liegenden Abschnitts der Leitung 6 kann beispielsweise ein einzelner oder eine Anordnung von mehreren Ölnebelabscheidern vorgesehen sein, die Öltröpfchen aus dem Kurbelgehäuseentlüftungsgas abscheiden und die gleichzeitig einen Druckabfall in der gasführenden Leitung 6 verursachen.

Die weiterführende Leitung 6' kann beispielsweise zum Ansaugtrakt der zugehörenden Brennkraftmaschine führen.

Im Betrieb des Aktors 100 und des Druckregelventils 1 wird die untere Membrankammer 14 über den Steuerdruckeingang 11 von dem Steuerdruck und die dritte Membrankammer 15 über die Durchbrechung 17' mit dem Gasdruck in der Ventilkammer 16 beaufschlagt, was je nach Größe der wirkenden Drücke zu einer mehr oder weniger großen Bewegung der Stellmembran 2 nach unten oder umgekehrt führt. Entsprechend wird der Schließkörper 3 relativ zum Abströmquerschnitt 18 verstellt, wodurch sich ein mehr oder weniger großer freier Strömungsquerschnitt oder ein Verschluß des Strömungsquerschnitts ergibt.

Die Stellung des Schließkörpers 3 relativ zum Abströmquerschnitt 18 wird bei dem Ausführungsbeispiel nach Figur 3 im wesentlichen durch den Steuerdruck in der zweiten Membrankammer 14 sowie durch die Kraft der Feder 4 bestimmt. Der Druck in der Ventilkammer 16 hat dagegen einen geringeren Einfluß auf die gerade eingenommene Stellung des Schließkörpers 3, weil der Druck in der dritten Membrankammer 15 hier nur mit kleiner Wirkfläche auf die Stellmembran 2 wirken kann. Der Wirkquerschnitt der Stellmembran 2, der von dem Steuerdruck in der unteren Membrankammer 14 beaufschlagt wird, ist um ein Vielfaches größer als der Wirkquerschnitt, der von dem Druck in der dritten Membrankammer 15 beaufschlagt werden kann. Damit wird die gewünschte Funktion des Druckregelventils, nämlich eine Regelung des Durchlaßquerschnitts im wesentlichen in Abhängigkeit vom Steuerdruck in der unteren Membrankammer 14, weitgehend erreicht. Gleichzeitig erfolgt die Abdichtung der Durchbrechung 17' in der Trennwand 17 durch die Dichtmembran 2' mit einer sehr geringen Reibung, so daß die Verstellbewegung der Stellmembran 2, des Verbindungselements 27 und des Schließkörpers 3 nicht durch mechanische Reibung beeinträchtigt und mit einer großen Hysterese und mit Verschleiß belastet wird.

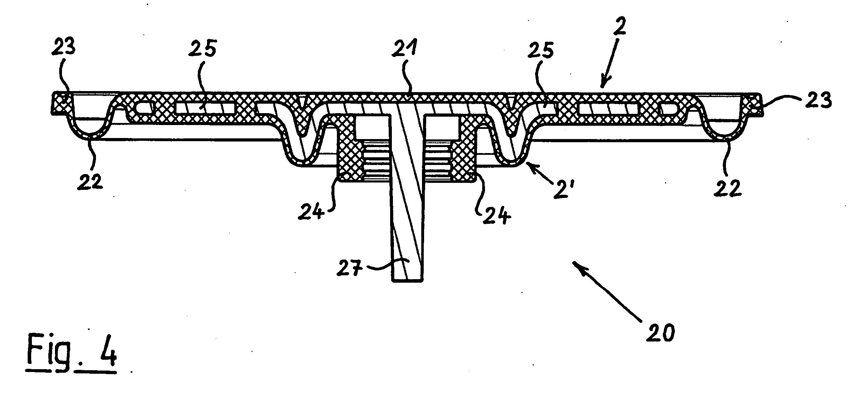

Das Bauteil 20 des Aktors 100 aus Figur 3, das den Membrantragkörper 25, die Stellmembran 2 und die Trennmembran 2' umfaßt, wird zweckmäßig nach einem besonderen Verfahren hergestellt. Die Figur 4 zeigt dieses Bauteil 20 unmittelbar nach seiner Herstellung in einem Spritzgußvorgang.

Der Membrantragkörper 25 wird vorab als eigenes Kunststoff-Spritzgußteil hergestellt und anschließend in eine zweite Spritzform eingelegt. In dieser Spritzform wird der Membrantragkörper 25 mit einem Elastomer umspritzt, der einstückig sowohl die Stellmembran 2 als auch die Trennmembran 2' bildet.

Wie die Figur 4 verdeutlicht, wird die nach oben weisende Kontur der Trennmembran 2' über den größten Teil ihrer Fläche durch die nach unten weisende Kontur des Membrantragkörpers 25 bestimmt. Hier bildet also die Unterseite des Membrantragkörpers 25 funktional einen Teil der Spritzform für die Trennmembran 2'.

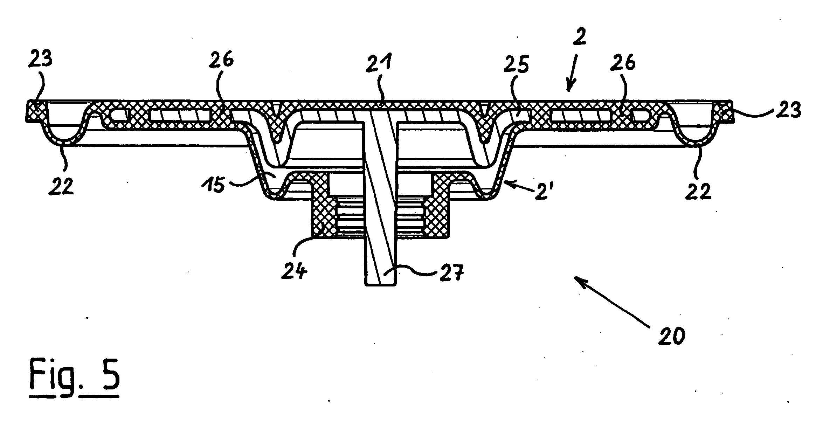

Figur 5 der Zeichnung schließlich zeigt das Bauteil 20 in seinem einbaufertigen Zustand unmittelbar vor dem Einbau in den Aktor 100 gemäß Figur 3. In diesem einbaufertigen Zustand ist die Trennmembran 2' mit ihrem Montage- und Dichtrand 24 in Axialrichtung des Verbindungselements 27 nach unten hin von dem Membrantragkörper 25 weggezogen und auf Abstand gebracht, wodurch zwischen Membrantragkörper 25 und Trennmembran 2' die dritte Membrankammer 15 gebildet wird. Um diesen Vorgang zu ermöglichen, ist entweder auf die Unterseite des Membrantragkörpers 25 in dessen der Trennmembran 2' benachbarten Bereich vor dem Spritzvorgang ein Trennmittel aufgetragen worden oder es werden solche Materialien verwendet, die beim Anspritzen der Stellmembran 2 und der Trennmembran 2' keine innige Verbindung mit dem Membrantragkörpermaterial eingehen, sondern die die in Figur 4 gezeigte Trennung der Trennmembran 2' vom Membrantragkörper 25 schadlos erlauben.

In dem in Figur 5 gezeigten Zustand kann die Stellmembran 2 zusammen mit dem Membrantragkörper 25 in Axialrichtung des Verbindungselements 27 unabhängig von der Trennmembran 2' bewegt werden. Der Montage- und Dichtrand 24 der Trennmembran 2' ist im montierten Zustand im Gehäuse 10 auf dem Stutzen 17'' fixiert, wie der Figur 3 entnehmbar ist.

Die Stellmembran 2 ist zusammen mit dem Membrantragkörper 25 und dem Verbindungselement 27 relativ zur Trennmembran 2' und relativ zum Gehäuse 10 bewegbar, wobei die Bewegung der Stellmembran 2 über deren radial außen liegenden Rollfalz 22 ermöglicht wird. Der Einspann- und Dichtrand 23 am radial äußeren Umfang der Stellmembran 2 ist im montierten Zustand des Aktors im Gehäuse 10 fixiert, wie ebenfalls der Figur 3 entnehmbar ist.

Durch das beschriebene Herstellungsverfahren für das Bauteil 20 ergibt sich eine einstückige Ausführung von Stellmembran 2 und Trennmembran 2', wodurch ein dichter Abschluß zwischen diesen beiden Teilen auf jeden Fall gewährleistet ist und wodurch fehleranfällige Klebe- oder Schweißverbindungen vermieden werden. Außerdem kann durch die Nutzung der trennmembranseitigen Oberfläche des Membrantragkörpers 25 als formgebende Oberfläche eine einfache Spritzform eingesetzt werden; dadurch ist der Herstellungsvorgang hier einfach und damit kostengünstiger als die Herstellung von zwei getrennten Membranen und deren anschließende dichte Verbindung miteinander.

## Patentansprüche

1. Pneumatischer Aktor (100) mit einem verstellbaren Verbindungselement (27), das mit einer von dem Aktor (100) zu verstellenden Einrichtung (1) verbindbar ist, wobei in einem Gehäuse (10, 10') eine mit dem Verbindungselement (27) verbundene Stellmembran (2) vorgesehen ist, die einerseits von einem ersten Gasdruck oder von ersten Gasdrücken in einer ersten Membrankammer (13) und andererseits von einem zweiten Gasdruck oder von zweiten Gasdrücken in einer zweiten Membrankammer (14) beaufschlagt ist, wobei eine dritte Membrankammer (15) vorgesehen ist, mit der mindestens ein weiterer Druck auf die Stellmembran (2) wirkt, wodurch bei Veränderung des Differenzdrucks zwischen den Membrankammern (13, 14, 15) die Stellmembran (2) und zusammen mit dieser das Verbindungselement (27) verstellt wird, wobei die dritte Membrankammer (15) einerseits von der Stellmembran (2) und andererseits von einer Trennmembran (2') begrenzt ist, wobei die Trennmembran (2') einerseits mit dem Gehäuse (10, 10') dichtend verbunden ist, wobei die Trennmembran (2') konzentrisch zur Stellmembran (2) angeordnet ist und wobei die Trennmembran (2') einen kleineren Durchmesser als die Stellmembran (2) hat,
**dadurch gekennzeichnet,**
**daß** die Trennmembran (2') andererseits mit der Stellmembran (2) dichtend verbunden ist, wobei die Trennmembran (2') mit der Stellmembran (2) in einem Bereich zwischen deren Zentralbereich (21) und deren radial äußerem Randbereich (22) verbunden ist, und daß die Stellmembran (2) und die Trennmembran (2') in einem Bauteil (20) zusammengefaßt sind, wobei in dem die Stellmembran (2) und die Trennmembran (2') umfassenden Bauteil (20) die Stellmembran (2) und die Trennmembran (2') ein einstückiges Membranelement bilden.

2. Aktor nach Anspruch 1, **dadurch gekennzeichnet, daß** das Bauteil (20) zusätzlich einen Membrantragkörper (25) umfaßt.

3. Aktor nach Anspruch 2, **dadurch gekennzeichnet, daß** das Membranelement (2 und 2') aus einem elastisch-flexiblen Elastomer und der Membrantragkörper (25) aus einem formstabilen Kunststoff besteht.

4. Aktor nach Anspruch 3, **dadurch gekennzeichnet, daß** der das Membranelement (2 und 2') bildende Elastomer in einer Spritzgußform an den Membrantragkörper (25) angespritzt und/oder um diesen herumgespritzt ist.

5. Aktor nach Anspruch 4, **dadurch gekennzeichnet, daß** der die Trennmembran (2') bildende Teil des Membranelements mit dem Membrantragkörper (25) nur in Teilbereichen verbunden oder teilweise lösbar verbunden ist und in einem unverbundenen Teil relativ zu dem Membrantragkörper (25) bewegbar ist und Abstand von diesem aufweisen kann.

6. Aktor nach einem der Ansprüche 2 bis 5, **dadurch gekennzeichnet, daß** das Verbindungselement (27) einstückig mit dem Membrantragkörper (25) ausgeführt ist.

7. Aktor nach einem der Ansprüche 2 bis 6, **dadurch gekennzeichnet, daß** der Membrantragkörper (25) einen kleineren Durchmesser als die Stellmembran (2) aufweist und daß radial außerhalb des Membrantragkörpers (25) die Stellmembran (2) einen Rollfalz und radial außen davon einen Einspann- und Dichtrand (23) aufweist, wobei der Einspann- und Dichtrand (23) dichtend mit dem Gehäuse (10, 10') des Aktors (100) in Eingriff steht.

8. Aktor nach einem der Ansprüche 1 bis 7, **dadurch gekennzeichnet, daß** die Stellmembran (2) durch eine Regelfeder (4) in einer ihrer Verstellrichtungen vorbelastet ist.

9. Aktor nach einem der Ansprüche 1 bis 8, **dadurch gekennzeichnet, daß** zwischen der ersten Membrankammer (13), in der der Referenzdruck herrscht, einerseits und der von dem Verbindungselement (27) zu verstellenden Einrichtung (1) andererseits eine Gehäusewand (17) mit einer Durchbrechung (17') angeordnet ist, durch die das Verbindungselement (27) zwischen Stellmembran (2) und Einrichtung (1) unter Freigang und offen hindurchgeführt ist.

10. Aktor nach einem der Ansprüche 1 bis 8, **dadurch gekennzeichnet, daß** zwischen der ersten Membrankammer (13) einerseits und der von dem Verbindungselement (27) zu verstellenden Einrichtung (1) andererseits eine Gehäusewand (17) mit einer Durchbrechung (17') ungeordnet ist, durch die das Verbindungselement (27) zwischen Stellmembran (2) und Einrichtung (1) mit Freigang und unter Abdichtung mittels einer Dichtmembran (5) hindurchgeführt ist.

11. Aktor nach Anspruch 10, **dadurch gekennzeichnet, daß** die Durchbrechung (17') von einem mit der Gehäusewand (17) verbundenen oder einstückigen Rohrstutzen (17'') umgeben ist und daß die Dichtmembran (5) falten- oder rollbalgartig die Durchbrechung (17') in der Gehäusewand (17) verschließend einerseits mit dem Rohrstutzen (17'') und andererseits mit dem Verbindungselement (27) verbunden ist.

12. Aktor nach Anspruch 10, **dadurch gekennzeichnet, daß** die Dichtmembran (5), die die Durchbrechung (17') in der Gehäusewand (17) dichtend verschließt, einerseits mit der Stellmembran (2) verbunden oder einstückig ist und andererseits mit einem die Durchbrechung (17') umgebenden Bereich der Gehäusewand (17) verbunden ist.

13. Aktor nach einem der vorhergehenden Ansprüche, **dadurch gekennzeichnet, daß** er Teil eines die Einrichtung (1) bildenden pneumatischen Druckregelventils (1) ist, das im Verlauf einer gasführenden Leitung (6, 6') angeordnet ist und eine von dem Gas durchströmte, mit der dritten Membrankammer (15) verbundene Ventilkammer (16) aufweist, deren Durchlaß im Druckregelventil (1).in Abhängigkeit vom Differenzdruck zwischen den Membrankammern (13, 14, 15) selbsttätig veränderbar ist, wobei in der Ventilkammer (16) ein mit einem Abströmquerschnitt (18) des Druckregelventils (1) zusammenwirkender Schließkörper (3) vorgesehen ist, der mit dem Verbindungselement (27) des aktors (100) verbunden ist und der den Durchlaß differenzdruckabhängig vergrößert oder verkleinert.

14. Aktor nach Anspruch 13, **dadurch gekennzeichnet, daß** der Aktor (100) und das Druckregelventil (1) ein selbsttätiges Kurbelgehäusedruckregelventil für die Regelung des Gasdrucks im Kurbelgehäuse einer Brennkraftmaschine bilden, daß das Druckregelventil (1) im Verlauf einer Kurbelgehäuseentlüftungsleitung angeordnet ist und daß an einen am Aktor (100) vorhandenen, mit der zweiten Membrankammer (14) verbundenen Steuerdruckeingang (11) eine diesen unmittelbar mit dem Inneren des Kurbelgehäuses verbindende Gasleitung angeschlossen ist.

15. Verfahren zur Herstellung eines die Stellmembran (2) und einen Membrantragkörper (25) umfassenden Bauteils für einen pneumatischen Aktor (100), wobei die Stellmembran (2) aus einem Elastomer im Spritzgußverfahren in einer Spritzgußform an den Membrantragkörper (25) angespritzt oder um diesen herumgespritzt wird,
**dadurch gekennzeichnet,**
**daß** neben der Stellmembran (2) zugleich und einstükkig mit dieser eine Trennmembran (2') gespritzt wird, die über ihre membrantragkörperseitige Fläche gesehen mit dem Membrantragkörper (25) nur in Teilbereichen verbunden oder teilweise lösbar verbunden wird und die einen mit dem Membrantragkörper (25) unverbundenen Flächenbereich aufweist.

16. Verfahren nach Anspruch 15, **dadurch gekennzeichnet, daß** die Trennmembran (2') in ihrem radial äußeren Bereich mit der Stellmembran (2) und/oder mit dem Membrantragkörper (25) verbunden wird.

17. Verfahren nach Anspruch 15 oder 16, **dadurch gekennzeichnet, daß** der Membrantragkörper (25) vorab als Spritzgußteil aus einem nach seinem Aushärten formbeständigen Kunststoff und mit eingeformten Verankerungsdurchbrechungen (26) für die Stellmembran (2) und/oder für den radial äußeren Bereich der Trennmembran (2') hergestellt wird.

18. Verfahren nach Anspruch 17, **dadurch gekennzeichnet, daß** der der Trennmembran (2') zugewandte Oberflächenbereich des Membrantragkörpers (25) bei dem Spritzen von Stell- und Trennmembran (2 und 2') innerhalb einer Spritzform als formgebende Oberfläche für die Trennmembran (2') verwendet wird.

19. Verfahren nach Anspruch 18, **dadurch gekennzeichnet, daß** auf den der Trennmembran (2') zugewandten, mit dieser nicht zu verbindenden Oberflächenbereich des Membrantragkörpers (25) vor dem Spritzen von Stell- und Trennmembran (2 und 2') ein Trennmittel aufgetragen wird und daß nach dem Spritzen von Stell- und Trennmembran (2 und 2') die Trennmembran (2') von dem Membrantragkörper (25) in ihrem nicht mit diesem verbundenen Bereich weggezogen und auf Abstand gebracht wird.

20. Verfahren nach Anspruch 18, **dadurch gekennzeichnet, daß** für den Membrantragkörper (25) zumindest in seinem der Trennmembran (2') zugewandten, mit dieser nicht zu verbindenden Oberflächenbereich einerseits und für die Stell- und Trennmembran (2 und 2') andererseits jeweils sich bei dem Spritzvorgang nicht oder nur unwesentlich verbindende Materialien verwendet werden und daß nach dem Spritzen von Stell- und Trennmembran (2 und 2') die Trennmembran (2') in ihrem nicht mit dem Membrantragkörper (25) verbundenen Bereich von dem Membrantragkörper (25) weggezogen und auf Abstand gebracht wird.

## Claims

1. A pneumatic actuator (100) comprising an adjustable connection element (27) which can be connected to an apparatus (1) to be adjusted by the actuator (100), wherein a control diaphragm (2) connected to the connection element (27) is provided in a housing (10, 10'), said control diaphragm (2) being, on the one hand, subjected to a first gas pressure or first gas pressures in a first diaphragm chamber (13) and, on the other hand, to a second gas pressure or second gas pressures in a second diaphragm chamber (14), wherein a third diaphragm chamber (15) is provided, which causes at least one additional pressure to act on the control diaphragm (2) whereby, if the differential pressure between the diaphragm chambers (13, 14, 15) changes, the control diaphragm (2) is adjusted, this causing the connection element (27) to be adjusted as well, wherein the third diaphragm chamber (15) is, on the one hand, delimited by the control diaphragm (2) and, on the other hand, by a separating diaphragm (2'), wherein the separating diaphragm (2') is, on the one hand, connected to the housing (10, 10') in a sealing manner, wherein the separating diaphragm (2') is arranged concentrically in relation to the control diaphragm (2) and wherein the separating diaphragm (2') is smaller in diameter than the control diaphragm (2),
**characterized in that** the separating diaphragm (2') is, on the other hand, connected to the control diaphragm (2) in a sealing manner, wherein the separating diaphragm (2') is connected to the control diaphragm (2) in a region between the latter's central region (21) and the latter's radially outward marginal region (22), and that the control diaphragm (2) and the separating diaphragm (2') are comprised in one component (20), wherein the control diaphragm (2) and the separating diaphragm (2') form a one-piece diaphragm element in the component (20) comprising the control diaphragm (2) and the separating diaphragm (2').

2. The actuator according to Claim 1, **characterized in that** the component (20) additionally comprises a diaphragm supporting body (25).

3. The actuator according to Claim 2, **characterized in that** the diaphragm element (2 and 2') is made of an elastic and flexible elastomer and the diaphragm supporting body (25) is made of a dimensionally stable plastic material.

4. The actuator according to Claim 3, **characterized in that** the elastomer forming the diaphragm element (2 and 2') is injection-molded to and/or around the diaphragm supporting body (25) in an injection mold.

5. The actuator according to Claim 4, **characterized in that** the part of the diaphragm element forming the separating diaphragm (2') is connected to the diaphragm supporting body (25) in partial areas only or in a partially detachable manner and, in an unconnected part, is movable in relation to the diaphragm supporting body (25) and can be spaced apart therefrom.

6. The actuator according to anyone of Claims 2 to 5, **characterized in that** the connection element (27) is formed integrally with the diaphragm supporting body (25).

7. The actuator according to anyone of Claims 2 to 6, **characterized in that** the diaphragm supporting body (25) comprises a smaller diameter than the control diaphragm (2) and that, in a radially outward direction from the diaphragm supporting body (25), the control diaphragm (2) comprises a roll groove and, in a radially outward direction therefrom, a fixing and sealing edge (23), wherein said fixing and sealing edge (23) engages the housing (10, 10') of the actuator (100).

8. The actuator according to anyone of Claims 1 to 7, **characterized in that** the control diaphragm (2) is preloaded in one of its adjustment directions by means of a governor spring (4).

9. The actuator according to anyone of Claims 1 to 8, **characterized in that** a housing wall (17) with an aperture (17') is arranged between the first diaphragm chamber (13) where the reference pressure is prevailing on the one hand and the apparatus (1) to be adjusted by the connection element (27) on the other hand, with said connection element (27) being passed through said aperture (17') between the control diaphragm (2) and the apparatus (1) with clearance and in an open manner.

10. The actuator according to anyone of Claims 1 to 8, **characterized in that** a housing wall (17) with an aperture (17') is arranged between the first diaphragm chamber (13) on the one hand and the apparatus (1) to be adjusted by the connection element (27) on the other hand, with said connection element (27) being passed through said aperture (17') between the control diaphragm (2) and the apparatus (1) with clearance and in an open manner and by means of a sealing diaphragm (5).

11. The actuator according to Claim 10, **characterized in that** the aperture (17') is surrounded by a pipe connection piece (17") which is either connected to the housing wall (17) or is formed in one piece and that the sealing diaphragm (5), while closing the aperture (17') in the housing wall (17) in the manner of a corrugated or air bellows, is connected to the pipe connection piece (17") on the one hand and to the connection element (27) on the other hand.

12. The actuator according to Claim 10, **characterized in that** the sealing diaphragm (5) which closes the aperture (17') in the housing wall (17) in a sealing manner is, on the one hand, connected to the control diaphragm (2) or is formed in one piece and is, on the other hand, connected to a housing wall (17) region which surrounds the aperture (17').

13. The actuator according to anyone of the preceding claims, **characterized in that** it is a part of a pneumatic pressure regulating valve forming the apparatus (1), said pneumatic pressure regulating valve being arranged in the path of a gas-carrying line (6, 6') and comprising a valve chamber (16) through which the gas is flowing and which is connected to the third diaphragm chamber (15), wherein the opening of said valve chamber (16) can be automatically changed in said pressure regulating valve (1) in relation to the differential pressure between the diaphragm chambers (13, 14, 15), wherein a closing element (3) cooperating with an outflow cross-section (18) of the pressure regulating valve (1) is provided in the valve chamber (16), said closing element (3) being connected to the connection element (27) of the actuator (100) and increasing or reducing the opening in relation to the differential pressure.

14. The actuator according to Claim 13, **characterized in that** the actuator (100) and the pressure regulating valve (1) form an automatic crankcase pressure regulating valve for controlling the gas pressure in the crankcase of an internal combustion engine, that the pressure regulating valve (1) is arranged in the path of a crankcase ventilation line, and that a gas line is connected to a control pressure input (11) which is provided at the actuator (100) and connected to the second diaphragm chamber (14), said gas line directly connecting said control pressure input (11) to the interior region of the crankcase.

15. A method for the manufacture of a component for a pneumatic actuator (100), said component comprising the control diaphragm (2) and a diaphragm supporting body (25), wherein the control diaphragm (2) is made of an elastomer and is injection-molded to or around the diaphragm supporting body (25) in an injection mold and according to the injection-molding method,
**characterized in that** a separating diaphragm (2') is simultaneously injection-molded next to the control diaphragm (2) integrally therewith, said separating diaphragm (2'), as seen across its surface on the side of the diaphragm supporting body, being connected to the diaphragm supporting body (25) in partial areas only or in a partially detachable manner and comprising an area which is not connected to the diaphragm supporting body (25).

16. The method according to Claim 15, **characterized in that** the separating diaphragm (2') is connected to the control diaphragm (2) and/or to the diaphragm supporting body (25) in its radially outward region.

17. The method according to Claim 15 or 16, **characterized in that** the diaphragm supporting body (25) is, in advance, manufactured as an injection-molded part made of a plastic material which is dimensionally stable after hardening, said diaphragm supporting body (25) being provided with formed-in anchoring apertures (26) for the control diaphragm (2) and/or for the radially outward region of the separating diaphragm (2').

18. The method according to Claim 17, **characterized in that** the surface region of the diaphragm supporting body (25) that is facing the separating diaphragm (2') is used as a forming surface for the separating diaphragm (2') while the control and separating diaphragms (2 and 2') are injection-molded within an injection mold.

19. The method according to Claim 18, **characterized in that**, prior to injection-molding of the control and separating diaphragms (2 and 2'), a mold release agent is applied to the surface region of the diaphragm supporting body (25) that is facing the separating diaphragm (2') and is not to be connected thereto, and that, subsequent to injection-molding of the control and separating diaphragms (2 and 2'), the separating diaphragm (2') is pulled away from the diaphragm supporting body (25) in its region not connected thereto and is being spaced apart therefrom.

20. The method according to Claim 18, **characterized in that** materials that do not connect or connect only to an insignificant degree to each other during the injection-molding procedure are, on the one hand, used for the diaphragm supporting body (25) at least in the latter's surface region facing the separating diaphragm (2') and not to be connected thereto and, on the other hand, for the control and separating diaphragms (2 and 2'), and that, subsequent to injection-molding of the control and separating diaphragms (2 and 2'), the separating diaphragm (2') is pulled away from the diaphragm supporting body (25) in its region not connected to the diaphragm supporting body (25) and is being spaced apart therefrom.

## Revendications

1. Actionneur pneumatique (100) avec un élément de connexion déplaçable (27) qui peut être relié à un dispositif (1) devant être déplacé par l'actionneur (100), une membrane de réglage (2) reliée à l'élément de connexion (27) étant prévue dans un logement (10, 10'), laquelle est sollicitée d'une part par une première pression gazeuse ou par des premières pressions gazeuses dans une première chambre de membrane (13) et d'autre part par une deuxième pression gazeuse ou par des deuxièmes pressions gazeuses dans une deuxième chambre de membrane (14), une troisième chambre de membrane (15) avec laquelle au moins une autre pression agit sur la membrane de réglage (2) étant prévue, moyennant quoi la membrane de réglage (2) et avec elle l'élément de connexion (27) sont déplacés en cas de modification de la pression différentielle entre les chambres de membrane (13, 14, 15), la troisième chambre de membrane (15) étant limitée d'un côté par la membrane de réglage (2) et de l'autre côté par une membrane de séparation (2'), la membrane de séparation (2') étant reliée de manière étanche d'un côté au logement (10, 10'), la membrane de séparation (2') étant disposée de manière concentrique par rapport à la membrane de réglage (2) et la membrane de séparation (2') ayant un diamètre inférieur à la membrane de réglage (2),
**caractérisé en ce**
**que** la membrane de séparation (2') est reliée de manière étanche de l'autre côté à la membrane de réglage (2), la membrane de séparation (2') étant reliée à la membrane de réglage (2) dans une région entre sa région centrale (21) et sa région marginale extérieure radialement (22), et que la membrane de réglage (2) et la membrane de séparation (2') sont regroupées dans un composant (20), la membrane de réglage (2) et la membrane de séparation (2') formant un élément membranaire d'une pièce dans le composant (20) comprenant la membrane de réglage (2) et la membrane de séparation (2').

2. Actionneur selon la revendication 1, **caractérisé en ce que** le composant (20) comprend en outre un corps support de membrane (25).

3. Actionneur selon la revendication 2, **caractérisé en ce que** l'élément membranaire (2 et 2') se compose d'un élastomère flexible élastiquement et le corps support de membrane (25) d'un plastique indéformable.

4. Actionneur selon la revendication 3, **caractérisé en ce que** l'élastomère formant l'élément membranaire (2 et 2') est injecté dans un moule pour injection sur le corps support de membrane (25) et/ou injecté autour de celui-ci.

5. Actionneur selon la revendication 4, **caractérisé en ce que** la partie de l'élément membranaire formant la membrane de séparation (2') est reliée au corps support de membrane (25) dans des régions partielles uniquement ou est reliée en partie de manière amovible et est mobile dans une partie non reliée par rapport au corps support de membrane (25) et peut présenter un écart par rapport à celui-ci.

6. Actionneur selon l'une quelconque des revendications 2 à 5, **caractérisé en ce que** l'élément de connexion (27) est réalisé d'une pièce avec le corps support de membrane (25).

7. Actionneur selon l'une quelconque des revendications 2 à 6, **caractérisé en ce que** le corps support de membrane (25) présente un diamètre inférieur à la membrane de réglage (2) et que la membrane de réglage (2) présente radialement en dehors du corps support de membrane (25) un pli de roulement et radialement à l'extérieur de celui-ci un bord de serrage et d'étanchéité (23), le bord de serrage et d'étanchéité (23) étant en contact de manière étanche avec le logement (10, 10') de l'actionneur (100).

8. Actionneur selon l'une quelconque des revendications 1 à 7, **caractérisé en ce que** la membrane de réglage (2) est précontrainte par un ressort de régulation (4) dans une de ses directions de déplacement.

9. Actionneur selon l'une quelconque des revendications 1 à 8, **caractérisé en ce qu'**une paroi de logement (17) avec une découpure (17') à travers laquelle l'élément de connexion (27) est guidé entre la membrane de réglage (2) et le dispositif (1) avec un passage libre et de manière ouverte, est disposée entre la première chambre de membrane (13) dans laquelle la pression de référence règne, d'un côté, et le dispositif (1) devant être déplacé par l'élément de connexion (27) de l'autre côté.

10. Actionneur selon l'une quelconque des revendications 1 à 8, **caractérisé en ce qu'**une paroi de logement (17) avec une découpure (17') à travers laquelle l'élément de connexion (27) est guidé entre la membrane de réglage (2) et le dispositif (1) avec un passage libre et en étanchéifiant au moyen d'une membrane d'étanchéité (5), est disposée entre la première chambre de membrane (13) d'un côté et le dispositif (1) devant être déplacé par l'élément de connexion (27) de l'autre côté.

11. Actionneur selon la revendication 10, **caractérisé en ce que** la découpure (17') est entourée d'une tubulure (17") reliée à la paroi de logement (17) ou d'une pièce et que la membrane d'étanchéité (5) est reliée d'un côté à la tubulure (17") et de l'autre côté à l'élément de connexion (27) en fermant à la manière d'un soufflet ou ressort pneumatique la découpure (17') dans la paroi de logement (17).

12. Actionneur selon la revendication 10, **caractérisé en ce que** la membrane d'étanchéité (5) qui ferme de manière étanche la découpure (17') dans la paroi de logement (17), est reliée d'un côté à la membrane de réglage (2) ou est d'une pièce et est reliée de l'autre côté à une région de la paroi de logement (17) entourant la découpure (17').

13. Actionneur selon l'une quelconque des revendications précédentes, **caractérisé en ce qu'**il fait partie d'un régulateur de pression pneumatique (1) formant le dispositif (1) qui est disposé dans le cours d'une conduite conductrice de gaz (6, 6') et présente une chambre de soupape (16) parcourue par le gaz, reliée à la troisième chambre de membrane (15) dont le passage dans le régulateur de pression (1) peut être modifié automatiquement en fonction de la pression différentielle entre les chambres de membrane (13, 14, 15), un corps de fermeture (3) coopérant avec une section transversale d'écoulement (18) du régulateur de pression (1) étant prévu dans la chambre de soupape (16), lequel est relié à l'élément de connexion (27) de l'actionneur (100) et agrandit ou réduit le passage en fonction de la pression différentielle.

14. Actionneur selon la revendication 13, **caractérisé en ce que** l'actionneur (100) et le régulateur de pression (1) forment un régulateur de pression de carter automatique pour la régulation de la pression gazeuse dans le carter d'un moteur à combustion interne, que le régulateur de pression (1) est disposé dans le cours d'une conduite d'aération de carter et qu'une conduite de gaz reliant directement une entrée de pression de commande (11) présente sur l'actionneur (100), reliée à la deuxième chambre de membrane (14), à l'intérieur du carter est raccordée à cette entrée de pression de commande.

15. Procédé de fabrication d'un composant comprenant la membrane de réglage (2) et un corps support de membrane (25) pour un actionneur pneumatique (100), la membrane de réglage (2) constituée d'un élastomère étant injectée dans le procédé de moulage par injection dans un moule pour injection sur le corps support de membrane (25) ou injectée autour de celui-ci,
**caractérisé en ce**
**qu'**une membrane de séparation (2') est injectée en même temps outre la membrane de réglage (2) et d'une pièce avec celle-ci, laquelle membrane de séparation est reliée au corps support de membrane (25) dans des régions partielles uniquement, vu au-dessus de sa surface côté corps support de membrane, ou est reliée en partie de manière amovible et présente une région superficielle non reliée au corps support de membrane (25).

16. Procédé selon la revendication 15, **caractérisé en ce que** la membrane de séparation (2') est reliée dans sa région extérieure radialement à la membrane de réglage (2) et/ou au corps support de membrane (25).

17. Procédé selon la revendication 15 ou 16, **caractérisé en ce que** le corps support de membrane (25) est fabriqué au préalable en tant que pièce moulée par injection à partir d'un plastique indéformable après son durcissement et avec des découpures d'ancrage moulées (26) pour la membrane de réglage (2) et/ou pour la région extérieure radialement de la membrane de séparation (2').

18. Procédé selon la revendication 17, **caractérisé en ce que** la région superficielle du corps support de membrane (25) tournée vers la membrane de séparation (2') est utilisée en tant que surface de moulage pour la membrane de séparation (2') au sein d'un moule pour injection lors de l'injection de la membrane de réglage et de séparation (2 et 2').

19. Procédé selon la revendication 18, **caractérisé en ce qu'**un agent de séparation est appliqué sur la région superficielle du corps support de membrane (25) tournée vers la membrane de séparation (2'), ne devant pas être reliée à celle-ci, avant l'injection de la membrane de réglage et de séparation (2 et 2') et que la membrane de séparation (2') est retirée du corps support de membrane (25) dans sa région non reliée à celui-ci après l'injection de la membrane de réglage et de séparation (2 et 2') et amenée à l'écart.

20. Procédé selon la revendication 18, **caractérisé en ce que** lors du processus d'injection, aucun matériau de connexion ou seulement une partie négligeable n'est à chaque fois utilisé pour le corps support de membrane (25) du moins dans sa région superficielle tournée vers la membrane de séparation (2'), ne devant pas être reliée à celle-ci, d'une part et pour la membrane de réglage et de séparation (2 et 2') d'autre part et qu'après l'injection de la membrane de réglage et de séparation (2 et 2'), la membrane de séparation (2') est retirée du corps support de membrane (25) dans sa région non reliée au corps support de membrane (25) et amenée à l'écart.
